# EUROPÄISCHE PATENTANMELDUNG

(11) **EP 1 150 093 A2**
(43) Veröffentlichungstag der Anmeldung: **31.10.2001**
(21) Anmeldenummer: 01106683.4
(22) Anmeldetag: 16.03.2001
(51) Int. Cl.: G01B 5/30

(54) **Automatische Überwachungsanordnung von Wälzlagern in Maschinen und Fahrzeugen**

(30) Priorität: 25.04.2000 DE 10020174
(71) Anmelder: ROBERT BOSCH GMBH, 70442 Stuttgart (DE)
(72) Erfinder: Zabler, Erich, 76297 Stutensee (DE); Rosenberger-Koch, Marianne, 76135 Karlsruhe (DE); Dukart, Anton, 70839 Gerlingen (DE)

(57) **Zusammenfassung**

Die Erfindung betrifft eine Anordnung zur automatischen Überwachung von Wälzlagern in Maschinen und Fahrzeugen mit wenigstens einem an dem zu überwachenden Lager angebrachten Aufnehmer (A, B), der ein elektrisches Ausgangssignal erzeugt, das bezüglich einer einen Lagerdefekt angebenden Information von einer übergeordneten Auswerteeinheit auswertbar ist, und ist dadurch gekennzeichnet, dass der wenigstens eine Aufnehmer ein Dehnungsmessstreifen (A, B) ist, der an den Lagerschalen (1, 2) an einer Position angebracht ist, die ein hohes Signal/Störverhältnis des Ausgangssignals ermöglicht (Figur 1).

## Beschreibung

### Stand der Technik

Die Erfindung betrifft eine Anordnung zur automatischen Überwachung von Wälzlagern in Maschinen und Fahrzeugen mit wenigstens einem an dem zu überwachenden Lager angebrachten Aufnehmer, der ein elektrisches Ausgangssignal erzeugt, das bezüglich einer einen Lagerdefekt angebenden Information von einer übergeordneten Auswerteeinheit auswertbar ist.

Defekte Wälzlager werden normalerweise an typischen Reibgeräuschen erkannt, die vor allem entstehen, wenn die Lager quer zur Laufrichtung, also axial belastet werden. Des weiteren kann das bei Defekt oder durch Lockerung entstandene Spiel zur Erkennung eines Lagerdefekts ausgewertet werden. Als mögliche Schäden kommen defekte Wälzkörper (z. B. Kugeln) in Betracht, sei es, dass diese zu Bruch gegangen sind oder Abplatzer an der Oberfläche zeigen, oder aber auch eine Schädigung der beiden Lagerschalen, sei es, dass hier die Laufflächen beschädigt wurden oder gar eine Schale zu Bruch gegangen ist. Vorstellbar ist auch eine Beschädigung des Lagerkäfigs, der - mit den Kugeln umlaufend - diese auf Abstand hält.

Zur Überwachung wichtiger Maschinenteile (außer in Fahrzeugen) werden deren Lager teilweise auch durch Körperschallmikrophone überwacht, die fest angebaut oder angeklipst sein können.

Im Zuge längerer Wartungsintervalle kommen Fahrzeuge immer seltener zur Inspektion in die Werkstatt, wo routinemäßig auch die Lager überprüft werden können. Natürlich ist im Lauf der letzten Jahre auch die Betriebs- und Ausfallsicherheit der Wälzlager erheblich verbessert worden, so dass sich der Einbau spezieller Überwachungseinrichtungen bisher nicht gelohnt hätte.

Andererseits können Lagerschäden sicherlich nie ganz ausgeschlossen werden. In kritischen Fällen stellen schadhafte Lager jedoch ein hohes Sicherheitsrisiko dar und können evtl. erhebliche Folgeschäden erzeugen.

### Aufgabe und Vorteile der Erfindung

Es ist Aufgabe der Erfindung, eine Überwachungsanordnung zu ermöglichen, die sich anbahnende Lagerschäden oder bereits aufgetretene Lagerschäden sicher und rechtzeitig erkennen kann, so dass diese gegebenenfalls in der Werkstatt behoben werden können, bevor kritische Folgeschäden entstehen.

Die Aufgabe wird anspruchsgemäß gelöst.

Dadurch, dass gemäß einem wesentlichen Aspekt der Erfindung wenigstens ein Dehnungsmessstreifen an den Lagerschalen so angebracht ist, dass ein möglichst hohes Signal/Störverhältnis seines Ausgangssignals erzielt wird, kann eine übergeordnete Auswerteeinheit, die z.B. im Fahrzeug integriert ist, rechtzeitig und mit Sicherheit einen drohenden Radlagerschaden erkennen und gegebenenfalls ein Warnsignal erzeugen.

Die Erfindung schlägt deshalb vor, serienmäßig wenigstens einen Dehnungsmessstreifen an den Radlagerschalen anzubringen.

Diese können dann, in Verbindung mit der Auswerteeinheit, gleichzeitig zur laufenden Radlagerdiagnose (On-Board-Diagnose) und zur externen Diagnose verwendet werden.

Der erfindungsgemäßen Lösung liegt die Erkenntnis zugrunde, dass die Wälzkörper beim Passieren einer geeignet gewählten Messstelle des oder der Dehnungsmessstreifen starke lokale Dehnungen verursachen, so dass im Schadensfall das vom Dehnungsmessstreifen erzeugte Ausgangssignal von seinem typischen glatten (z.B. sinusförmigen) Verlauf in bestimmten, auswertbaren Parametern abweicht.

Gegenüber dem intakten, annähernd sinusähnlichen Verlauf kann das Ausgangssignal des Dehnungsmessstreifens einen wesentlich oberschwingungshaltigeren Signalverlauf aufweisen, oder aber die Periodizität der Ausgangssignale von Dehnungsmessstreifen kann im Vergleich mit der Periodizität des intakten Lagers gestört sein, wenn z. B. der Käfig zu Bruch gegangen ist und die Kugeln in unregelmäßiger Reihenfolge laufen.

Bevorzugt ist (sind) der (die) Dehnungsmessstreifen am Außenumfang der Lagerschalen so angebracht, dass die Dehnungsrichtung in Umfangsrichtung der Lagerschalen liegt. Der oder die Dehnungsmessstreifen ist bzw. sind bevorzugt an oder nahe einer Fuge der Lagerschalen angebracht.

Damit ist das geforderte hohe Signal/Stör-Verhältnis gesichert.

In einer bevorzugten Ausführungsform sind an Fahrzeugradlagern zwei Dehnungsmessstreifen an zwei unterschiedlichen Positionen am Außenumfang der Lagerschalen angebracht. Die Position der Dehnungsmessstreifen unterscheidet sich in diesem Fall hinsichtlich ihrer axialen und radialen Lage. Ihre Winkelposition ist jedoch bevorzugt dieselbe.

Die von den Dehnungsmessstreifen erzeugten Ausgangssignale können von der Auswerteeinheit hinsichtlich ihrer Periodizität und/oder Signalform ausgewertet werden, und die Auswerteeinheit kann einen Lagerdefekt durch periodische, kontinuierliche oder auf einen zugeleiteten Befehl hin durchgeführte Auswertung der Ausgangssignale der Dehnungsmessstreifen erkennen und gegebenenfalls ein Warnsignal erzeugen.

### Zeichnung

Nachstehend wird eine bevorzugte Ausführungsform einer erfindungsgemäßen Überwachungsanordnung bezogen auf die beiliegende Zeichnung beschrieben. Die Figuren zeigen im einzelnen:
Figur 1 schematisch zwei Lagerschalenhälften mit bevorzugten und weiteren möglichen, nicht so vorteilhaften Positionen von Dehnungsmessstreifen;
Figur 2 typische Ausgangssignalformen von Dehnungsmessstreifen A und B gemäß Figur 1 bei intakten Wälzlagern.

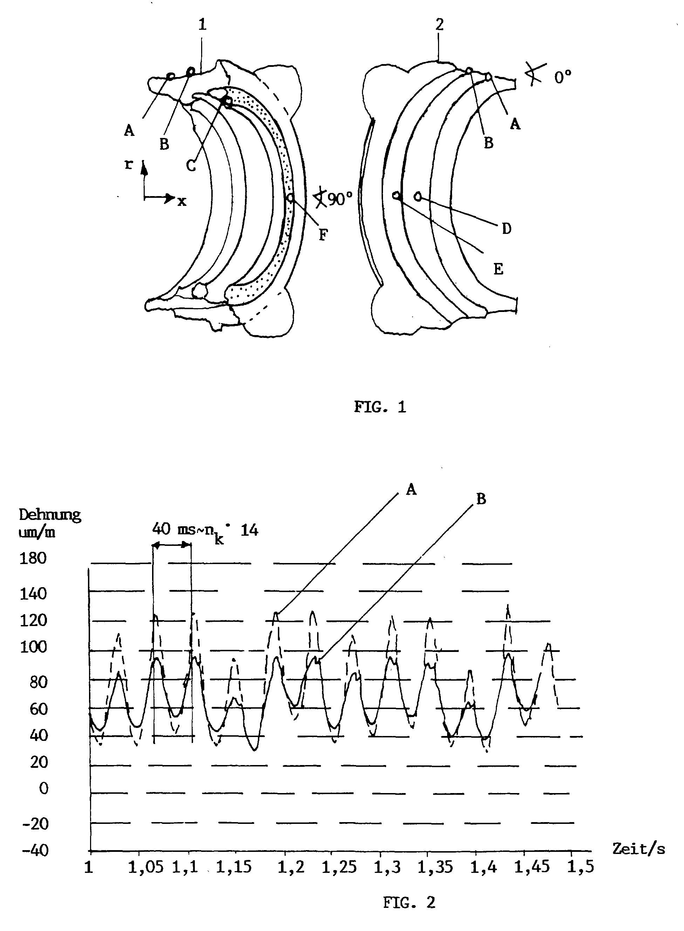

In Figur 1 sind zwei Hälften 1 und 2 eines Wälzlagers perspektivisch so dargestellt, dass von der ersten Lagerschalenhälfte 1 die Innenseite und von der zweiten Lagerschalenhälfte 2 die Außenseite zu erkennen ist. Die Figur 1 zeigt mehrere mögliche Positionen für Dehnungsmessstreifen A-F. Die Dehnungsmessstreifen A und B liegen an der Außenperipherie der Lagerschalenhälften 1 und 2 an jeweils unterschiedlichen radialen und axialen Positionen r und x. Die Winkelposition beider Dehnungsmessstreifen A und B ist dieselbe und liegt bei ϕ = 0°, d.h. an der Fuge der Lagerschalenhälften 1, 2. Ihre Dehnungs- oder Messrichtung liegt in Umfangsrichtung der Lagerschalen.

Ein weiterer Dehnungsmessstreifen C kann am Innenumfang der Lagerschale 1 ebenfalls in der Winkelposition ϕ = 0° an einer anderen axialen Position x und näher am Rotationsmittelpunkt des Lagers liegen. Weitere mögliche Positionen von Dehnungsmessstreifen D und E können bei ϕ = 90° am Außenumfang der Lagerschale 2 liegen. Schließlich kann ein Dehnungsmessstreifen F am Innenumfang der Lagerschale 1 bei ϕ = 90° liegen.

Wie nachstehend anhand der in Figur 2 graphisch dargestellten Messergebnisse deutlich wird, erzeugen die Dehnungsmessstreifen A und B besonders starke Signalmodulationen aufgrund des Kugelumlaufs des Wälzlagers, d. h. ihre Ausgangssignale haben ein großes Signal/Störverhältnis, während die anderen Dehnungsmessstreifen C-F eine geringere Signalreaktion liefern. Aus diesem Grund schlägt die Erfindung vor, einen Dehnungsmessstreifen A oder B oder beide Dehnungsmessstreifen A und B gemäß Figur 1 zur Ableitung der von ihnen erzeugten Signale und damit zur automatischen Überwachung des Wälzlagers zu verwenden. Zwei Dehnungsmessstreifen A und B gemäß Fig. 1 sind dann zu bevorzugen, wenn das Wälzlager zwei parallele Nuten für die umlaufenden Wälzkörper hat.

Der Grund dafür, dass gerade die Dehnungsmessstreifen A und B besonders große Signalreaktionen liefern, liegt darin, dass sie an der Fuge der Lagerschalen angebracht sind, wo die Dehnungswirkung aufgrund einer vorbeilaufenden Kugel besonders groß ist. Denn die Kugeln erzeugen beim Passieren der Dehnungsmessstreifen A oder B starke lokale Dehnungen, die im Schadensfall von dem in Figur 2 dargestellten typischen glatten Verlauf in einigen Parametern abweichen.

Figur 2 zeigt, dass der Verlauf der von den Dehnungsmessstreifen A und B erzeugten Ausgangssignale annähernd sinusförmig ist. Dabei beruhen die in Figur 2 dargestellten Messergebnisse auf folgender Messanordnung: Das Lager drehte sich mit einer Drehzahl von 250/min, was einer Periode von T = 40 ms entspricht. Die Wälzkörpermodulationsfrequenz beträgt für diese Drehzahl 24,5 Hz. Die gestrichelt eingezeichnete Response für den Dehnungsmessstreifen A erwies sich als noch größer als die Response des Dehnungsmessstreifens B, die durch eine ausgezogene Kurve dargestellt ist.

Der besseren Übersichtlichkeit halber sind in Figur 2 die Signalverläufe für die weiteren Dehnungsmessstreifen C-F weggelassen. Ihre Amplituden waren jedoch durchweg viel kleiner als die der eingezeichneten Signalverläufe der Dehnungsmessstreifen A und B.

## Patentansprüche

1. Anordnung zur automatischen Überwachung von Wälzlagern in Maschinen und Fahrzeugen mit wenigstens einem an dem zu überwachenden Lager angebrachten Aufnehmer, der ein elektrisches Ausgangssignal erzeugt, das bezüglich einer einen Lagerdefekt angebenden Information von einer übergeordneten Auswerteeinheit auswertbar ist,
**dadurch gekennzeichnet, dass** der wenigstens eine Aufnehmer ein Dehnungsmessstreifen (A, B) ist, der an den Lagerschalen (1, 2) an einer Position angebracht ist, die ein hohes Signal/Störverhältnis des Ausgangssignals ermöglicht.

2. Überwachungsanordnung nach Anspruch 1, **dadurch gekennzeichnet, dass** der oder die Dehnungsmessstreifen am Außenumfang der Lagerschalen angebracht ist bzw. sind und die Dehnungsrichtung des (der) Dehnungsmessstreifen (A, B) in Umfangsrichtung der Lagerschalen (1, 2) liegt.

3. Überwachungsanordnung nach Anspruch 1 oder 2, **dadurch gekennzeichnet, dass** der (die) Dehnungsmessstreifen (A, B) an oder nahe einer Fuge der Lagerschalen (1, 2) angebracht ist bzw. sind.

4. Überwachungsanordnung nach einem der vorangehenden Ansprüche, **dadurch gekennzeichnet, dass** an Fahrzeugradlagern zwei Dehnungsmessstreifen (A, B) in zwei unterschiedlichen Positionen am Außenumfang der Lagerschalen (1, 2) liegen.

5. Überwachungsanordnung nach Anspruch 4, **dadurch gekennzeichnet, dass** sich die Dehnungsmessstreifen (A, B) hinsichtlich ihrer axialen und radialen Lage (x, r) unterscheiden, jedoch die gleiche Winkelposition (ϕ) haben.

6. Überwachungsanordnung nach einem der vorangehenden Ansprüche, **dadurch gekennzeichnet, dass** die Auswerteeinheit Periodizität und/oder Signalform des oder der Ausgangssignale von dem oder den Dehnungsmessstreifen (A, B) hinsichtlich eines Lagerdefekts kontinuierlich, periodisch oder auf einen zugeleiteten Befehl hin auswertet.

7. Überwachungsanordnung nach einem der vorangehenden Ansprüche, **dadurch gekennzeichnet, dass** die Auswerteeinheit in der Maschine bzw. im Fahrzeug integriert ist.
